# EUROPEAN PATENT SPECIFICATION

(11) **EP 3 105 904 B1**
(45) Date of publication and mention of the grant of the patent: **06.12.2017**
(21) Application number: 15708365.0
(22) Date of filing: 09.02.2015
(51) Int. Cl.: H04L 29/06, H04W 12/06

(54) **ASSISTED DEVICE PROVISIONING IN A NETWORK**
UNTERSTÜTZTE VORRICHTUNGSBEREITSTELLUNG IN EINEM NETZWERK
FOURNITURE ASSISTÉE DE SERVICES DE DISPOSITIF DANS UN RÉSEAU

(30) Priority: 10.02.2014 US 201461937891 P; 14.05.2014 US 201461996812 P; 06.02.2015 US 201514616551
(43) Date of publication of application: 21.12.2016
(73) Proprietor: Qualcomm Incorporated, San Diego, CA 92121 (US)
(72) Inventor: BENOIT, Olivier Jean, San Diego, California 92121-1714 (US); MALINEN, Jouni Kalevi, San Diego, California 92121-1714 (US); TINNAKORNSRISUPHAP, Peerapol, San Diego, California 92121-1714 (US)
(74) Representative: Wegner, Hans
(86) International application number: PCT/US2015/014992
(87) International publication number: WO 2015/120373

(56) References cited:
- US-A1- 2004 107 366
- US-A1- 2005 076 216
- US-A1- 2013 185 559
- US-A1- 2013 223 279
- Wi-Fi Alliance: "Wi-Fi Simple Configuration Technical Specification", , 30 January 2012 (2012-01-30), XP055050847, Retrieved from the Internet: URL:https://www.wi-fi.org/knowledge-center /published-specifications [retrieved on 2013-01-23]
- WI-FI ALLIANCE: "Wi-Fi CERTIFIED for Wi-Fi Protected Setup: Easing the User Experience for Home and Small Office Wi-Fi Networks", INTERNET CITATION, 2009, XP002567243, Retrieved from the Internet: URL:http://www.wi-fi.org/wp/wifi-protected -setup [retrieved on 2010-02-01]

## Description

### TECHNICAL FIELD

Embodiments of the present disclosure generally relate to the field of communication systems, and, more particularly, to device provisioning in a communication network.

### BACKGROUND

In many communication systems (e.g., satellite communication systems, wireless communication systems, powerline communication (PLC) systems, coaxial cable communication systems, telephone line systems, etc.), a network is comprised of devices that communicate with each other via a communication medium. Typically, a device must be granted access to the network before the device can communicate via the communication medium. The process of granting access may be referred to as device provisioning, and may include operations for association, enrollment, authentication, and/or other operations.

However, provisioning a new device for a network may be technically complicated or difficult for a user. For example, a new device may be required to enroll and/or authenticate to a network device (such as an access point) to gain access to network resources available through the network device. In traditional communication systems, the enrollment procedure may use security credentials provided by a user to control access and prevent unauthorized usage. Typical enrollment steps can include entering codes or other information by the user as the client device comes within communication range of the network device. However, these configuration steps can seem overly complicated to some users and may discourage the use of networks and their resources altogether.

Furthermore, some devices may be considered "headless" devices. Headless devices are devices which do not have a graphical user interface. Examples of headless devices might include sensors, light bulbs, cameras, actuators, appliances, game controllers, audio equipment or other communication devices that are capable of communicating via the communication network but which may not have a graphical user interface due to commercial or technical limitations. Initial network configuration of a headless device may be difficult due to the lack of a graphical user interface.

Simplifying device provisioning may enhance user experience and encourage adoption of more types of devices in a communication system. Document US 2013/0223279 A1 gives an example of the use of a mobile device as a configurator device in the prior art.

### SUMMARY

This disclosure describes various embodiments of device provisioning to facilitate enrollment of a device being introduced to a network. Device provisioning may be enhanced using concepts from public key cryptography, in which the public keys are exchanged between devices using a device provisioning protocol. The device provisioning protocol may be directly between two devices, or may involve a third device referred to as a configurator device.

The configurator device may serve as an intermediary between a new client device and a network device. For example, an exchange of public keys between the client device and the network device may be facilitated by a configurator device having a trust relationship with the network device. The trust relationship may be established using an out-of-band communication. Enrollment of the new client device may be assisted by sharing one or more public keys through a trusted out-of-band channel with the configurator device. The invention is defined by the independent claims. Further embodiments are defined by the dependent claims.

### BRIEF DESCRIPTION OF THE DRAWINGS

The present disclosure may be better understood, and numerous objects, features, and advantages made apparent to those skilled in the art by referencing the accompanying drawings.
**Figure 1** is a conceptual diagram that introduces concepts of assisted device provisioning (e.g., enrollment, configuration, and/or authentication), in accordance with an embodiment of this disclosure;
**Figure 2** is an example block diagram illustrating various key sharing features, in accordance with an embodiment of this disclosure;
**Figure 3** is a flow diagram illustrating operations performed by a configurator device, in accordance with an embodiment of this disclosure;
**Figure 4** is a message flow diagram illustrating an example of assisted device provisioning using a configurator device to provide a client public key to a network device, in accordance with embodiments of this disclosure;
**Figure 5** is a message flow diagram illustrating an example of assisted device provisioning in which a client device monitors a default channel, in accordance with embodiments of this disclosure;
**Figure 6** is a message flow diagram illustrating an example of assisted device provisioning in which a configurator device provides an enrollment key to a client device, in accordance with embodiments of this disclosure;
**Figure 7** is a message process diagram illustrating a configurator device and network device establishing a trust relationship, in accordance with an embodiment of this disclosure;
**Figure 8** is a message process diagram illustrating a client device and network device establishing a connection, in accordance with an embodiment of this disclosure;
**Figure 9** is a message process diagram illustrating a cloud-based trusted configurator service for assisted device provisioning, in accordance with an embodiment of this disclosure;
**Figure 10** is another message process diagram illustrating a cloud-based trusted configurator service using certificates, in accordance with an embodiment of this disclosure;
**Figure** 11 is a message process diagram illustrating an access point acting as a configurator service to facilitate a peer-to-peer wireless connection, in accordance with an embodiment of this disclosure;
**Figure 12** is a message process diagram illustrating adding a second configurator device, in accordance with an embodiment of this disclosure;
**Figure 13** is a conceptual diagram illustrating public key lists, in accordance with an embodiment of this disclosure; and
**Figure 14** is an example block diagram illustrating a device capable of implementing various embodiments of this disclosure.

### DESCRIPTION OF EMBODIMENT(S)

The description that follows includes exemplary systems, methods, techniques, instruction sequences and computer program products that embody techniques of the present disclosure. However, it is understood that the described embodiments may be practiced without these specific details. For instance, although examples described herein refer to wireless local area network (WLAN) enrollment, embodiments are not so limited. In other embodiments, the device provisioning may be implemented by client devices in other suitable shared-medium communication networks, such as powerline communications (PLC), coax networks, and/or phone line local area networks, etc. In some instances, well-known instruction instances, protocols, structures and techniques have not been shown in full detail in order not to obfuscate the description.

Embodiments of this disclosure may facilitate the device provisioning of a client device with a network device of a communication network. Device provisioning can enable the client device to gain access via the network device to other devices or network resources, such as data storage, printers, cloud-based resources, and/or internet access, etc. In this disclosure, the terms enrollment, enrolling, etc., are used to refer, interchangeably, to device provisioning.

In one embodiment, a configurator device may obtain a client public key associated with the client device and send the client public key to the network device. The network device may use the client public key in an enrollment process between the network device and the client device. Following a completion of the enrollment process, the client device may be configured for use with the network device, such as to gain access to other network resources. Further authentication may also be performed as a result of the successful enrollment process.

In one embodiment, the network device can use the client public key to enroll the client device without the client public key being shared (e.g., being transmitted) via a communication channel between the network device and the client device. For example, the network device can use the client public key to produce a shared key between the network device and client device. The shared key may be provided to the client device using an enrollment protocol in which public keys are exchanged and the shared key is determined locally by each of the client device and the network device without transmitting the shared key via the communication medium. The enrollment protocol being used can include operations based, at least in part, on Diffie-Hellman, Simultaneous Authentication of Equals (SAE), Wi-Fi Protected Setup (WPS) and/or any other technically feasible key establishment protocol using the client public/private keys and network public/private keys. In this manner, permission to gain access to the network device can be transparent to the user of the client device, for example, without the user having to take actions such as entering codes or passwords.

The client public key can be determined and provided to the network device via a trusted device, such as a configurator device. The configurator device may be collocated with the network device, or may be separate. The configurator device may be a user device, such as a smart phone, that establishes a trust relationship with the network device, such as an access point. In some embodiments, the configurator device may have proximity, or trust, in relation to the client device. For example, the configurator device may obtain the client public key using an out-of-band communication directly with the client. The use of out-of-band communication can help by avoiding potential impersonation or man-in-the-middle attacks. The configurator device may be configured to obtain the client public key from the client device so that no other public key could be improperly used as the public key for the client device.

A network may maintain a list of devices, and associated public keys, to coordinate enrollment of a device at several network devices. For example, a client device added at a first network device may be enrolled at second network device in response to the first network device sharing the public key of the client device to the second network device. Additionally, when a client device is removed from a network, removal of the device public key from the list of devices may cascade the removal of the client device among other network devices. One or more network devices of a network may maintain a list of client device and a list of configurator devices that are associated with the network. The public keys of the client device(s) and configurator device(s) may be shared between trusted devices in the network.

In some embodiments, a configurator device may certify the client public key to create a client certificate, and may also certify a network public key to create a network certificate. The client certificate and the network certificate could be certified using a configurator private key. The certificates could be used to facilitate enrollment between the client device and the network device, since the authenticity of the client public key and network public key can be verified by each of these two devices.

In the foregoing description, the configurator device may be used in a number of different embodiments. For example, the configurator device may be used to transfer a single public key (e.g., the client public key from the client device) to the network device. In another example, the configurator device may be used to transfer two public keys (e.g., the client public key and the network public key) to the network device and client device, respectively. In another example, the configurator device may also provide a certification feature to each of the client device and network device. In the various examples, the configurator device may utilize a trust relationship with the network device and out-of-band communication with the client device to provide confidence that the public keys are shared between the correct client device and correct network device.

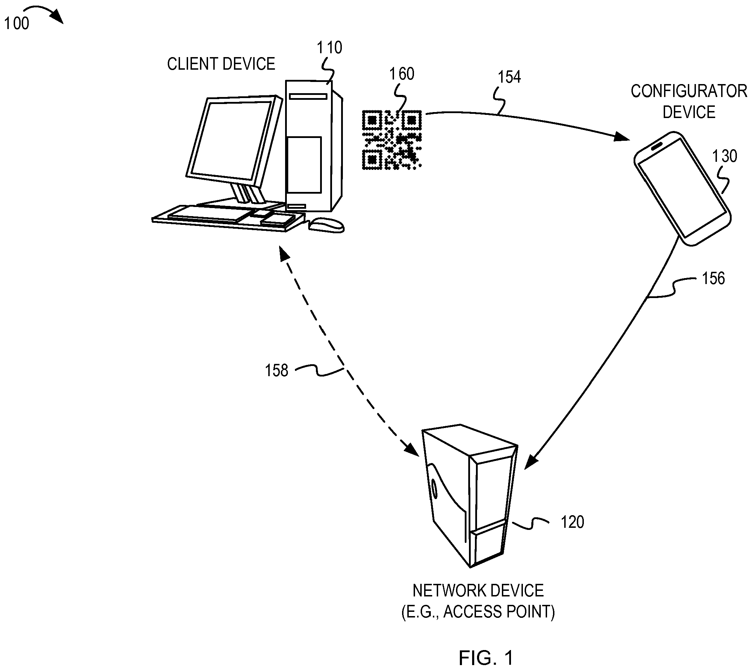

**Figure 1** depicts an example system 100 in which the present disclosure may be used. In the example system 100, a client device 110 may be within range of communication to a network device 120. The client device 110 may be a laptop, smartphone, appliance, or any other device which has not yet been authorized by the network device 120. The network device 120 may also be referred to as an enroller device. As an example, the network device 120 may be a WLAN access point. The client device 110 may be considered communicatively coupled with the network device 120 after it has been provisioned with the network device 120. In some embodiments, the client device 110 may be referred to as an enrollee device until it has been properly provisioned by the network device 120.

In a hypothetical scenario, a friend or family member (i.e., that is a user of a client device) visiting a house may wish to gain access to a WLAN via the access point. Alternatively, access to a WLAN may be provided for guests at a hotel, convention center, or public space, but is restricted based on authentication. In traditional WLAN deployments, a user of the client device 110 may be required to enter a passcode or other information to permit the client device 110 to properly authenticate with the network device 120. According to this disclosure, client device 110 may be provisioned, in some embodiments, without requiring a user to manually enter a passcode or network key. Furthermore, the security of the WLAN may be maintained so that only authorized users are allowed to gain access to the WLAN.

As shown in Figure 1, a configurator device 130 may assist with provisioning of the client device 110. The configurator device 130 may be a computing device (such as laptop, personal computer, tablet, smartphone, networked appliance, or the like). In the hypothetical example, configurator device 130 is a mobile device having a camera, processor, and network interface. The configurator device 130 is communicatively coupled to network device 120. To get the client device 110 enrolled to the network device 120, the configurator device 130 may obtain a client public key associated with the client device 110 and provide it to the network device 120.

In this disclosure, when referring to public keys and private keys, each public key and private key may be related in a pair. The private and public keys in a pair may form two keys which are mathematically linked but are different from each other. The public key may be used to encrypt information or to verify a digital signature. The private key may be used to decrypt the information or to create a digital signature. A person of skill in the art may recognize this concept by other names, such as public-key cryptography or asymmetric cryptography. It should be understood that other security mechanisms may be used in addition to, or alternatively from, the public key encryption. For example, dynamic keys, key rotation, hashing algorithms, or other mechanisms may be used in addition to, or alternatively from, the public key and private key mechanisms describe herein. For simplicity, public key cryptography is described in this disclosure as an example embodiment.

As shown in Figure, 1, the client public key 154 may be obtained by taking a picture of a Quick Response (QR) coded image 160 having the client public key 154 encoded therein. The configurator device 130 decodes the client public key 154 and provides the client public key 154 to the network device 120 in an enrollment message 156. The network device 120 may use the client public key 154 in an enrollment process and/or further authentication (shown at 158), such that the client device 110 is communicatively added to the network without passing sensitive data over the network.

The configurator device 130 may extend the enrollment capabilities of the network device 120 to a mobile device. For example, the network device 120 may not be equipped with camera, scanner, short range radio interface, or near field communications (NFC) tag reader capabilities. Furthermore, the network device 120 may be mounted in a fixed position or in a hard to reach location. Nevertheless, the configurator device 130 may be a mobile device and better suited to obtain the client public key of a client device 110 being added to the network. The configurator device 130 can provide the client public key to the network device 120 for use in enrolling the client device 110.

Referencing the example of the household scenario given above, a family member or friend may simply launch an application that presents (e.g., displays an encoded image) the client public key of their client device. The owner of the household can add the client device to the network by detecting the client public key using a mobile device that is acting as a configurator device 130. Similarly, guests to a hotel or convention may be granted access to wireless network services using assisted enrollment without the need for passcodes or complicated manual configuration.

It should be understood that a device may operate as the configurator device 130 in one environment, while operating as the client device 110 in another environment. As an example, a mobile device belonging to Person A may be used in Person A's home as a configurator device 130 for a network device 120 in Person A's home. The same mobile device belonging to Person A may be used as a client device 110 when the mobile device is in Person B's home and for a different network device (not shown) in Person B's home. Finally, the mobile device may also operate as the network device 120, such as when a mobile device is used as a hotspot or a Peer-to-Peer (P2P) Group owner. In some embodiments, the network device 120 and configurator device 130 features may be collocated or embodied in the same physical apparatus. For example, the mobile device may provide a mobile hotspot to other devices. At the same time, the mobile device may operate as a configurator device 130 for assisting the enrollment of new client devices.

The foregoing hypothetical scenarios are provided for illustrative purposes. It is noted that many alternative uses of this disclosure may be contemplated. In the foregoing descriptions, several embodiments are described which may utilize a configurator device to assist with provisioning of a new client device.

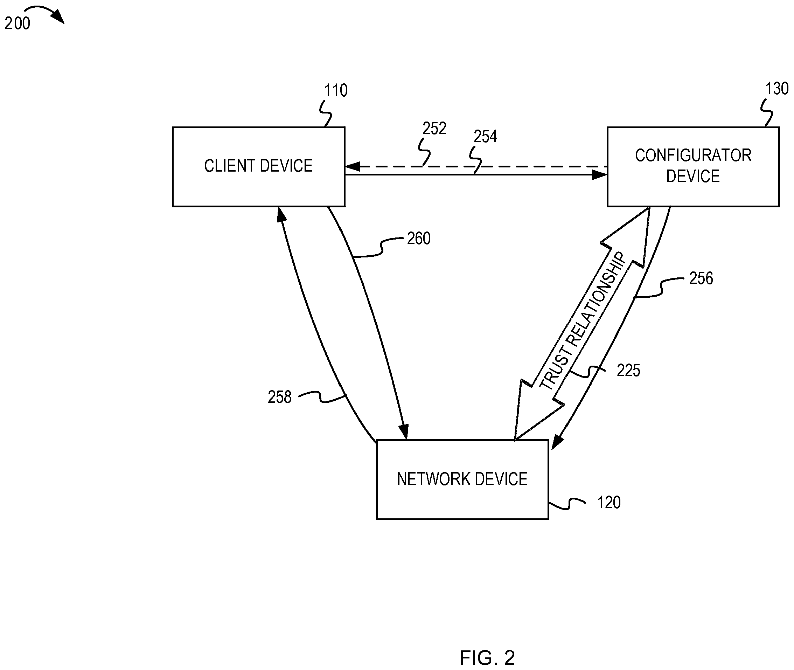

**Figure 2** depicts an example system 200 with additional detail. Similar to Figure 1, a client device 110 may be within range of communication to a network device 120. In this example, a configurator device 130 may assist network device 120 with provisioning the client device 110.

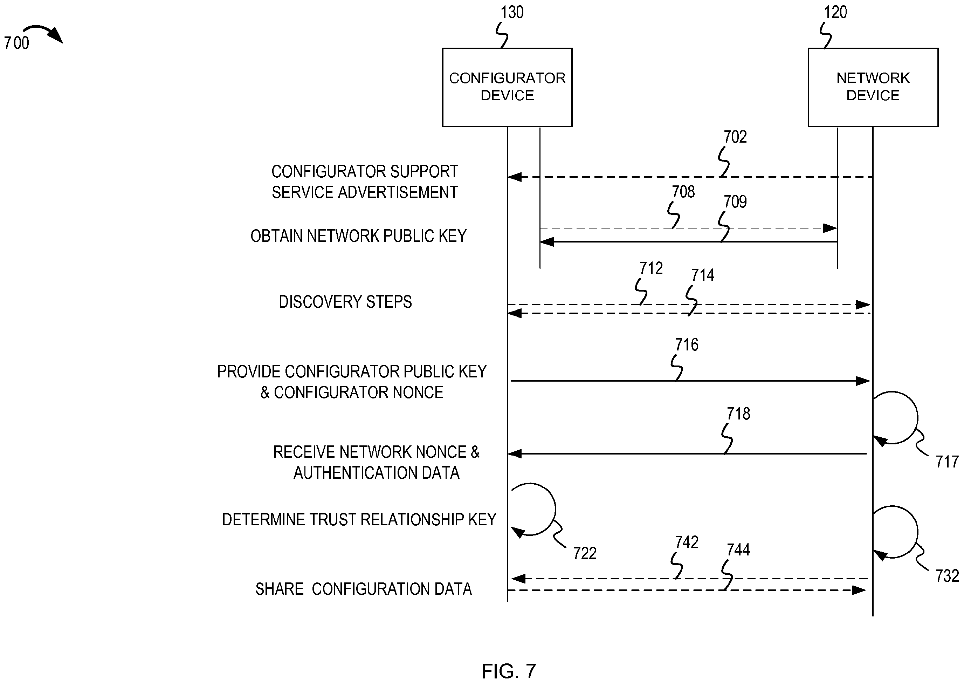

The configurator device 130 may establish a trust relationship 225 between the configurator device 130 and network device 120. Examples of the trust relationship 225 are further described with reference to Figure 7. The trust relationship 225 may include the use of security keys to authenticate and/or encrypt communications between the configurator device 130 and network device 120. Furthermore, the trust relationship 225 represents a relationship in which the configurator device 130 is authorized to assist with provisioning of new devices, such as client device 110.

Establishing the trust relationship may include steps for the configurator device 130 to set up a trust relationship key for the trust relationship 225. For example, the configurator device 130 may determine a network public key associated with the network device 120. The configurator device 130 may have a configurator public key and a corresponding configurator private key. The configurator device 130 may determine the trust relationship key based at least in part on the network public key and the configurator private key. Similarly, the network device 120 may determine the trust relationship key based at least in part on the network private key and the configurator public key.

In Figure 2, the configurator device 130 obtains a client public key (shown as line 254) associated with the client device 110. The client device 110 may have a client public key 254 and a corresponding client private key. The configurator device 130 may obtain the client public key 254, for example, by using an out-of-band communication channel or detection. For example, the configurator device 130 may utilize a camera to scan an image associated with the client device 110. The image may be a 2D or a 3D image. For example, the image may be a Quick Response (QR) code or a barcode. The image may be affixed to the client device 110 or packaging associated with the client device 110. Other types of visual, audio, or electrical out-of-band communication channel may be used by the configurator device 130 to obtain the client public key 254. For simplicity, the examples herein are described in terms of an image having the client public key encoded therein.

In some embodiments, the image may be static or ephemeral. For example, the client device 110 may be equipped with a display and may create a different image for different instances of enrollment or for different networks. The client public key 254 can be determined by scanning and decoding the machine readable image (e.g., the QR code) with a camera, smart phone, scanner, or other machine readable code reader of the configurator device 130. Using a machine readable image, such as a QR code, can help to determine the client public key relatively quickly, and can reduce human error associated with obtaining or reading the client public key. In yet another embodiment, a near field communication (NFC) tag (not shown) containing the client public key 254 can be provided by the manufacturer, and be attached to, or located proximate to, the client device 110. The NFC tag can be read by a NFC tag reader to determine the client public key 254. Using the NFC tag can also reduce errors in determining client public key 254 of client device 110.

Once the configurator device 130 has obtained the client public key 254, the configurator device 130 may send the client public key 254 in an enrollment message 256 to the network device 120. In one embodiment, prior to sending the enrollment message 256, the configurator device 130 may initiate enrollment by sending a request message to the network device 120. The request message (not shown) may cause the network device 120 to provide a nonce for the enrollment. The nonce may be a random or pseudorandom number that can be provided by the network device 120. The configurator device 130 may use the nonce to prepare a signature to accompany the client public key 254. The signature may also be based on an encryption and/or a signing process that proves the configurator device 130 is authorized to send the enrollment message 256. The enrollment message 256 may include the client public key 254 and the signature, as well as other information. For example, the enrollment message 256 may include information regarding how the client public key 254 was obtained, a timestamp, an identifier of the network device 120, an enrollment request identifier, and/or other information. In one embodiment, the signature, the nonce, or both, may be encrypted using the trust relationship key.

When the network device 120 receives the enrollment message 256, the network device 120 may verify the signature as coming from a properly authorized configurator device 130 having a trust relationship 225 with the network device 120. If the signature is verified, the network device 120 may use the client public key 254 from the enrollment message 256 to complete the enrollment directly with the client device 110. For example, in one embodiment, the network device 120 may initiate the enrollment by transmitting a probe response message (not shown) in response to a probe request message. The probe response message may include a hash or other derivative of the client public key. In another embodiment, the network device 120 may initiate enrollment and perform an initial wireless association to establish a communication session with the client device 110, over which further authentication and configuration can be exchanged.

The enrollment and authentication of the client device 110 may include an authentication procedure between the network device 120 and the client device 110. For example, the network device 120 may send an authentication request message 258 to the client device 110. The authentication request message 258 may include the network public key as well as a nonce provided by the network device ("network-provided nonce"). The client device 110 may generate a second nonce (or a "client-provided nonce"), and then generate a shared key using the network-provided nonce, the client-provided nonce, the network public key, and the client private key. Next, the client device 110 may send an authentication response message 260 back to the network device 120. The authentication response message 260 may include the client-provided nonce and a message authentication code (MAC) of the client-provided nonce. The MAC of the client-provided nonce may be a cryptographic hash function of the client-provided nonce (e.g., that has been prepared using the shared key).

The network device 120 can similarly prepare a shared key. The shared key may be generated from the network-provided nonce, the client-provided nonce, the client public key, and the network private key. The network device 120 can verify that it has the same shared key as that generated by client device 110 if the network device 120 generates a same MAC from the client-provided nonce and shared key as the MAC included in the authentication response message 260.

Once the existence of the shared key has been verified, the network device 120 may consider the client device 110 as enrolled. The network device 120 may use the shared key for further communications (not shown on Figure 2) between the network device 120 and client device 110, such as configuration, network association, or additional authentication. For example, the network device 120 may send configuration data to the client device 110. The configuration data may include settings for the wireless access, such as an SSID of the wireless access point, channel, or power settings. The configuration data may also include additional information for security, application layer, or other settings used by the client device 110 to communicate via the network device 120.

Following enrollment, in one embodiment, the client device 110 and network device 120 may perform further authentication (not shown in Figure 2). For example, a 4-way handshake procedure may be performed between the client device 110 and network device 120 to complete authentication and/or association of the client device 110. A pairwise master key (PMK) may be used for subsequent Wi-Fi™ Protected Access (WPA) handshake and configuration messages. In one embodiment, the shared key (SK) generated based on the network-provided nonce, the client-provided nonce, the network public key, and the client private key may be used as the PMK. Alternatively, the PMK can be derived from SK. The client device may derive the PMK using a predetermined function or algorithm having at least the SK as an input variable. Similarly, the network device may derive the PMK using the predetermined function or algorithm and the same SK. For example, the PMK can be a hash of the SK. The PMK can then be used for the 4-way handshake or further association/configuration steps between the client device and the network device.

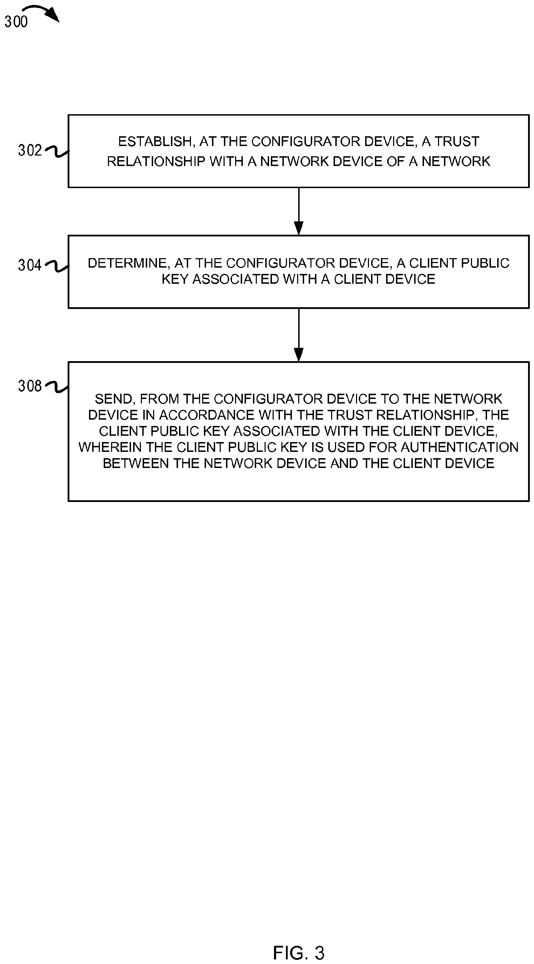

**Figure 3** depicts an example flow 300 of operations that may be performed by a configurator device (such as the configurator device 130), according to some embodiments. At block 302, the configurator device may establish a trust relationship with a network device of a network. Examples of establishing a trust relationship are provided in Figures 2 and 7.

At block 304, the configurator device may determine a client public key associated with a client device. For example, determining the client public key may include using a camera, microphone, light detector, scanner, short-range radio frequency interface (such as Bluetooth™ or NFC) or other sensor of the configurator device to detect the client public key using an out-of-band medium. In some embodiments, the method used to determine the client public key may require proximity between the configurator device and the client device, to protect from unintended remote access or security breach.

At block 308, the configurator device may send the client public key associated with the client device in accordance with the trust relationship, the client public key to be used for authentication between the network device and the client device.

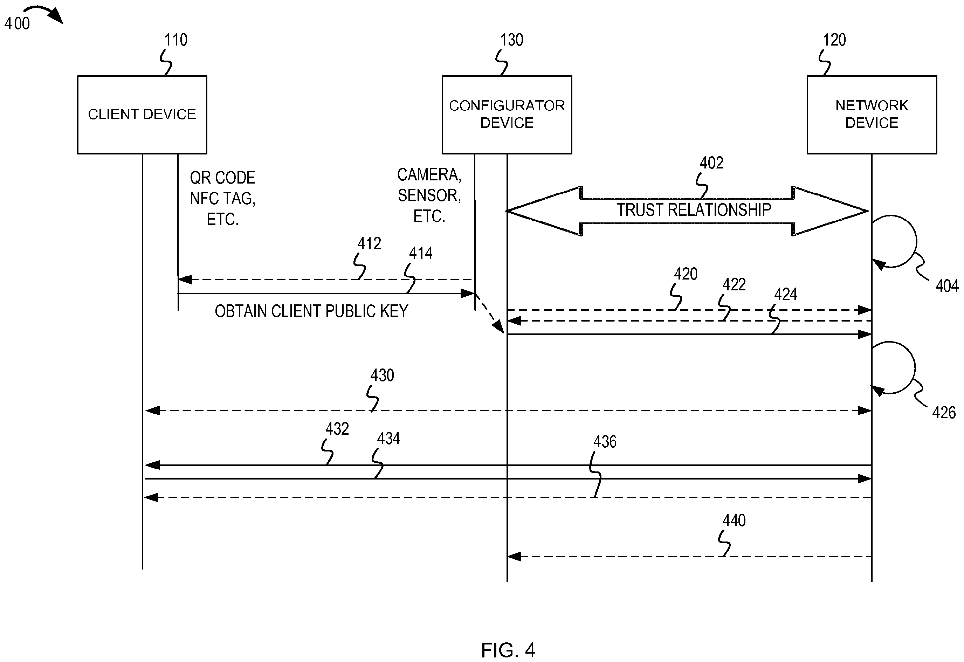

**Figure 4** is a message flow diagram illustrating an example of assisted device provisioning using a configurator device to provide a client public key to a network device, in accordance with embodiments of this disclosure In the example message flow 400 of Figure 4, a configurator device 130 may obtain the client public key 414 using a one-way out-of-band communication medium. The configurator device 130 has established a trust relationship 402 with the network device 120. In some embodiments, the trust relationship 402 may be preconfigured prior to when the configurator device obtains the client public key of the client device 110. Alternatively, the trust relationship 402 may be established responsive to or after the configurator device obtains the client public key associated with the client device 110.

Upon establishing the trust relationship 402, the network device 120 may store information 404 regarding the configurator device 130, such as a configurator public key, identifier, authorization period, or the like. The stored information 404 may be used later, such as to verify the authorization of the configurator device 130, and/or to assist with enrollment and authentication of the client device 110. For example, the stored information 404 may be used to decrypt or verify a signature provided by the configurator device 130 in an enrollment message.

The configurator device 130 may use an out-of-band medium to obtain the client public key 414 of the client device 110. For example, the client public key may be obtained via camera and image, short range radio frequency signals (such as Bluetooth or NFC) or other out-of-band medium. In some embodiments, the configurator device 130 may optionally query 412 the client device 110 to obtain the client public key 414. In some embodiments, the configurator device 130 may not query 412 the client device 110, such as when the client public key 414 is obtained by scanning a coded image. The client public key may be static or ephemeral. If the client public key is ephemeral, the client device 110 may generate a client public key and provide the client public key to the configurator device 130 responsive to the query 412. In other instances, the client public key may be static. If the out-of-band medium does not support bidirectional communication, the configurator device 130 may simply detect the client public key using a sensor, microphone, light detector, camera, or other capabilities of the configurator device.

The configurator device 130 may initiate an enrollment session by sending an enrollment request 420 to the network device 120. The network device 120 may send a response 422 with a nonce (which may also be referred to as an enrollment nonce or enrollment session identifier). The nonce may be a random or pseudorandom number provided by the network device 120. In some implementations, the nonce may be generated by the configurator device 130 and provided in the enrollment request 420, and acknowledged by the response 422. Use of a nonce may prevent so-called replay attacks which are a security breach using a previously used message exchange to introduce unauthorized data.

The configurator device 130 may provide the client public key of the client device 110 to the network device 120 in an enrollment message 424. As described previously, the enrollment message 424 may include other information such as a signature that is derived from the enrollment nonce. The signature may be used to verify (shown at verification procedure 426) the authority of the configurator device 130 before proceeding with enrollment of the client device 110. If verified, the client public key may be stored for use in an authentication process.

In response to the enrollment message 424 and verification of the signature, the network device 120 may perform an enrollment procedure 430. The enrollment procedure may include one or more of a beacon message, probe request message, a probe response message, an authentication begin message, an authentication initiation message, an association request, and an association response. These messages may be referred to as discovery steps that are used to establish an initial communication between the client device 110 and the network device 120, over which further authentication and configuration can occur. In one example, the enrollment procedure 430 includes the establishment of an authentication channel that can be used by an authentication protocol, such as extensible authentication protocol (EAP).

An example authentication process may include authentication request message 432 (similar to authentication request message 258) and an authentication response message 434 (similar to authentication response message 260). As described in Figure 2, the authentication process may include the use of a network-provided nonce (in authentication request message 432) and a client-provided nonce (in authentication response message 434) to determine a shared key between the client device 110 and the network device 120.

Following the authentication request message 432 and authentication response message 434, a configuration process may occur. For example, the network device 120 may transmit configuration data 436 to the client device 110. The configuration data 436 may include information such as an SSID of the access point, wireless channel information (such as a channel identifier), application layer keys, etc. In one example, the configuration data 436 may be secured based at least in part on the shared key. For example, the configuration data 436 may be encrypted using the shared key or a derivative of the shared key.

The shared key may also be used in a subsequent authentication process used for network access. For example, an additional authentication (not shown in Figure 1) may include a 4-way handshake procedure performed between the client device 110 and network device 120. The 4-way handshake procedure may be based upon a pairwise master key that is derived from the shared key.

The network device 120 may send a confirmation message 440 to the configurator device 130 to confirm that the client device 110 was successfully enrolled and/or authenticated to the network. Responsive to the confirmation message 440, the configurator device 130 may provide a visual, auditory, and/or other signal to alert the user that network enrollment and/or authentication was successfully completed.

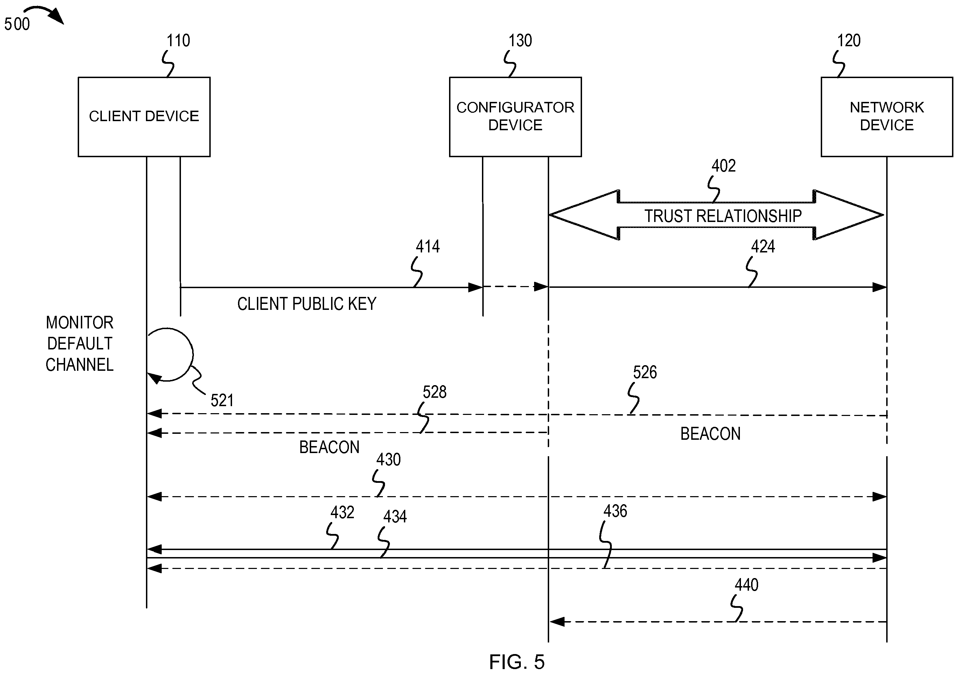

**Figure 5** is a message flow diagram illustrating an example of assisted device provisioning in which a client device monitors a default channel, in accordance with embodiments of this disclosure. In the example message flow 500 of Figure 5, a client device 110 is provisioned by a configurator device 130 or network device 120 over a temporary default channel. The configurator device 130 has established a trust relationship 402 with the network device 120. After establishing the trust relationship 402, the configurator device 130 may use an out-of-band medium to obtain (shown at 414) the client public key of the client device 110. For example, the configurator device 130 may scan a QR code associated with the client device 110. The configurator device 130 may send an enrollment message 424 having the client public key to the network device 120. In this example, the client device 110 is provisioned using a default channel. For example, the client device 110 may monitor 521 a default channel for a beacon message that initiates the device provisioning. In one embodiment, the client device 110 may monitor the default channel if it does not already have a network connection. Alternatively, the client device 110 may periodically monitor the default channel for a beacon message from any network device that wishes to provision the client device 110.

Either the network device 120 or the configurator device 130 may temporarily access the default channel to send a beacon message. For example, the network device 120 may send a beacon message 526 over the default channel. In another example, the configurator device 130 may send a beacon message 528 over the default channel. Other types of discovery messages, in addition to or in lieu of a beacon message, could be used. Device provisioning (e.g., enrollment and/or authentication) can continue as described previously (see corresponding descriptions of messages 430-440 in Figure 4).

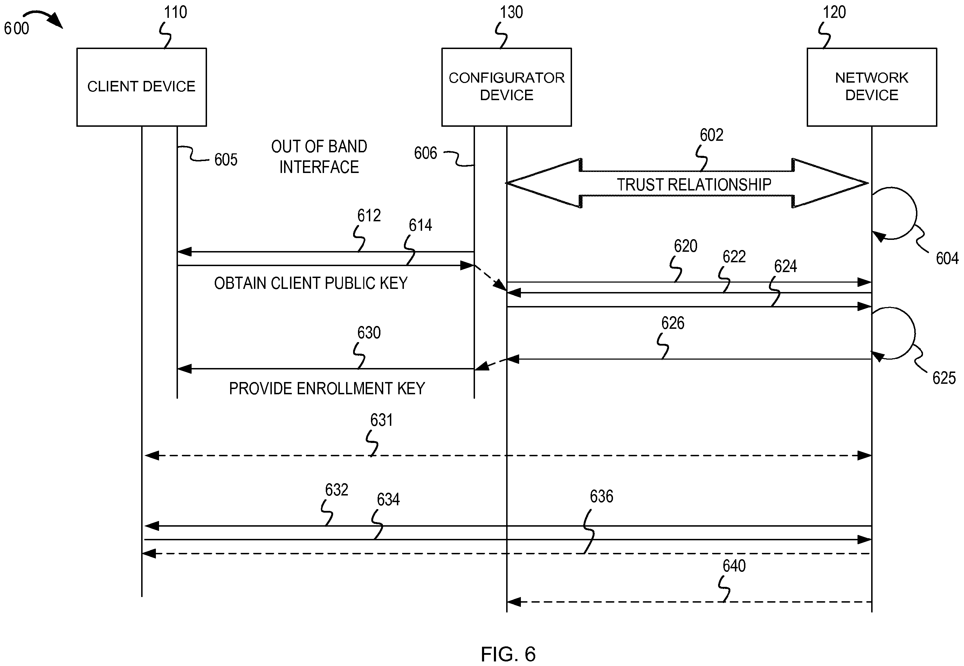

**Figure 6** is a message flow diagram illustrating an example of assisted device provisioning in which a configurator device provides an enrollment key to a client device, in accordance with embodiments of this disclosure. In the example message flow 600 of Figure 6, the configurator device 130 may obtain the client public key 614 using a bidirectional out-of-band communication medium. In this example, the configurator device 130 may also provide a network public key 630 (which may also be referred to as an enrollment public key).

The configurator device 130 has established a trust relationship 602 with the network device 120. After establishing the trust relationship 602, the network device 120 may store information 604 regarding the configurator device 130, such as a configurator public key, identifier, authorization period, or the like.

The configurator device 130 may use an out-of-band interface 606 to obtain the client public key of the client device 110 via an out-of-band medium and out-of-band interface 605. In the example of Figure 6, the out-of-band medium supports bidirectional communication. The out-of-band medium is different from the communication medium to which the network device 120 controls access. Therefore, the client device 110 and the configurator device 130 may be configured with an alternative communication interface, such as short range radio frequency interface, peer-to-peer wireless networking, directly wired medium, or other communications medium that supports bidirectional communication. The configurator device 130 may send a query message 612 to the client device 110 to obtain the client public key of the client device 110. In response to the query message 612, the client device 110 may respond with a response message 614 including the client public key.

Similar to the messages 420-424 in Figure 4, the configurator device 130 may send an enrollment request 620 to the network device 120, receive a response 622 with a nonce (which may also be referred to as an enrollment nonce or enrollment session identifier), and send an enrollment message 624 having the client public key and a signature based at least in part on the enrollment nonce. The signature may be used in verification procedure 625 to verify the authority of the configurator device 130 before proceeding with the enrollment of the client device 110. If verified, the client public key may be stored for use in an authentication process.

In the example of Figure 6, the network device 120 may provide an enrollment key 626 to the configurator device 130. The enrollment key 626 may also be referred to as a network public key associated with the network device 120. However, in the example of Figure 6, the enrollment key 626 is a one-time use enrollment key provided for the configurator device 130 to send to the client device 110 using the bidirectional two-way communications medium. The configurator device 130 provides the enrollment key 630 to the client device 110. The enrollment key may be a public key having a corresponding private key stored at the network device 120. In some examples, the configurator device 130 may send a network public key or an enrollment key that is previously known by the configurator device 130. For example, the network device 120 may provide an enrollment key to the configurator device 130 after establishing the trust relationship 602. The enrollment key may have an expiration time and/or may be unique to the particular configurator device 130. Alternatively, if provided in the message 626, the enrollment key could be specific to the client device 110.

At 631, the network device 120 may perform discovery steps to establish an initial communication between the client device 110 and the network device 120. The discovery steps may be modified to make use of the enrollment key. For example, the enrollment key (or a derivative thereof) may be used in a probe request message or a probe response message as a way to verify the identity of the client device 110 and/or the network device 120. Alternatively, the enrollment key (or a derivative thereof) may be included in a beacon message from the network device 120. If identify of the client device 110 or network device 120 cannot be verified, then the enrollment process may end, preventing further unnecessary communication or authentication from consuming processor or network resources.

Similar to Figures 2 and 4, the example authentication process may include authentication request message 632 and an authentication response message 634. Differently from Figure 4, in Figure 6, the authentication request message 632 may not include a network public key. As the configurator device 130 already provided the enrollment key to the client device 110 using the bidirectional out-of-band communications medium. Instead, the authentication request message 632 may include the network-provided nonce, but may not include the network public key. Next, as described in Figures 2 and 4, the authentication process may include the use of a network-provided nonce (in authentication request message 632), a client-provided nonce (in authentication response message 634) and their respective private keys and the other's public key to determine a shared key between the client device 110 and the network device 120. At 636, a configuration process may include the transmission of configuration data from the network device 120 to the client device 110.

The network device 120 may send a confirmation message 640 to the configurator device 130 to confirm that the client device 110 was successfully enrolled and authenticated to the network. Responsive to the confirmation message 640, the configurator device 130 may provide a visual, auditory, and/or other signal to alert the user that network enrollment and authentication was successfully completed.

**Figure 7** depicts an example message flow 700 for establishing a trust relationship between the configurator device 130 and the network device 120. The network device 120 may transmit a configurator support service advertisement message 702. The configurator support service advertisement message may be part of a beacon message or an overhead message. For example, the configurator support service advertisement message may be included in a message that indicates capabilities of the network device 120. The configurator support service advertisement message 702 may indicate to the configurator device 130 that the network device 120 supports the use of assisted enrollment and authentication, as described in this disclosure.

The configurator device 130 may use an out-of-band medium to obtain a network public key associated with the network device 120. For example, the configurator device 130 may send a query message 708 to the network device 120 to request the network public key. The network device 120 may provide the network public key in a response message 709. Alternatively, the configurator device 130 may simply use a camera, barcode scanner, short range radio frequency interface, or NFC tag reader to detect the network public key. In one example, the configurator device 130 obtains the network public key by decoding an image having machine-encoded data. The configurator device 130 may also obtain other information, such as an identifier (ID) or configuration information of the network device. In one embodiment, the identifier may be derived from the network public key. The configuration information might include default channel information.

The configurator device 130 and network device 120 may perform discovery steps 712, 714 to establish an initial communication between the configurator device 130 and the network device 120. The discovery steps 712, 714 may be similar to those described in Figures 4-6. The discovery steps may also be used to verify that the configurator device 130 and the network device 120 should continue with establishing the trust relationship. For example, the configurator device 130 may transmit a probe request message that includes the ID of the network device. The network device 120 may verify the ID matches the correct ID of the network device, and then respond with a probe response message. If the ID of network device 120 cannot be verified, then the network device 120 may discontinue communicating with the configurator device 130 and/or prevent the trust relationship from being established.

The configurator device 130 may send an authentication request message 716 to the network device 120 with an indication that the configurator device 130 would like authority to act as a configurator device for the network device 120. The authentication request message 716 may include the configurator public key and a configurator-provided nonce. Additionally, the authentication request message 716 may indicate other information, such as the method used to obtain the network public key, an identifier of the configurator device 130, or other information.

The network device 120 may use the configurator-provided nonce, configurator public key, a network-provided nonce, and a network private key, to determine a trust relationship key 625. The network device 120 may use the shared key to encrypt the network-provided nonce. Optionally, other information may also be encrypted with the network-provided nonce, such as a service set identifier (SSID) of a WLAN, or other network configuration information. For example, the network device 120 may generate a MAC based at least in part on the SSID and network-provided nonce.

At authentication response message 718, the network device 120 provides the network-provided nonce and the MAC to the configurator device 130. If the SSID was used to generate the MAC, the SSID may optionally be included in the authentication response message 718.

The configurator device 130 may use the network-provided nonce, configurator-provided nonce, configurator private key, and network public key to determine the trust relationship key 722. The configurator device 130 may use the trust relationship key to calculate a MAC to verify that the configurator-generated MAC matches the network-provided MAC in the authentication response message 718.

The network device 120 may store 732 the configurator public key, and optionally the trust relationship key for later use. For example, the configurator public key may be stored in a listing of authorized configurator devices. The configurator public key may be stored for a limited time and may be removed upon expiration of a time period. Alternatively, the configurator device may send a message (not shown) which indicates that it is no longer acting as a configurator device for the network. The network device may then remove the configurator public key and trust relationship key. The network device may be configured to remove all configurator public keys upon reboot or reset. Furthermore, the network device may limit the quantity of concurrently-approved configurator devices.

In one embodiment, the trust relationship may also be used to exchange configuration data. For example, one or more configuration messages 742, 744 may be transmitted to convey configuration data. In one example, the network device 120 may transmit the current configuration data 742 to the configurator device 130. In another example, the configurator device 130 may transmit new configuration data 744 to the network device 120.

In one embodiment, similar messages and procedures may be performed in a peer-to-peer environment between two devices. In other words, in one embodiment, the configurator device 130 and network device 120 of Figure 7 may be peer devices establishing a peer-to-peer relationship using similar messages that would be used to establish the described trust relationship above. In the peer-to-peer embodiment, the devices may perform a peer-to-peer discovery procedure and group negotiation prior to exchanging public keys. Often, in peer-to-peer environments one of the devices may act as a group manager, having similar functionality as the described network device 120.

In another embodiment, similar messages and procedures may be performed for device provisioning directly between a client device 110 and a network device 120. In other words, the configurator device 130 of Figure 7 may behave as a client device that is not yet provisioned for the network associated with network device 120. The client device may be establishing a network connection using similar messages that would be used to establish the described trust relationship above.

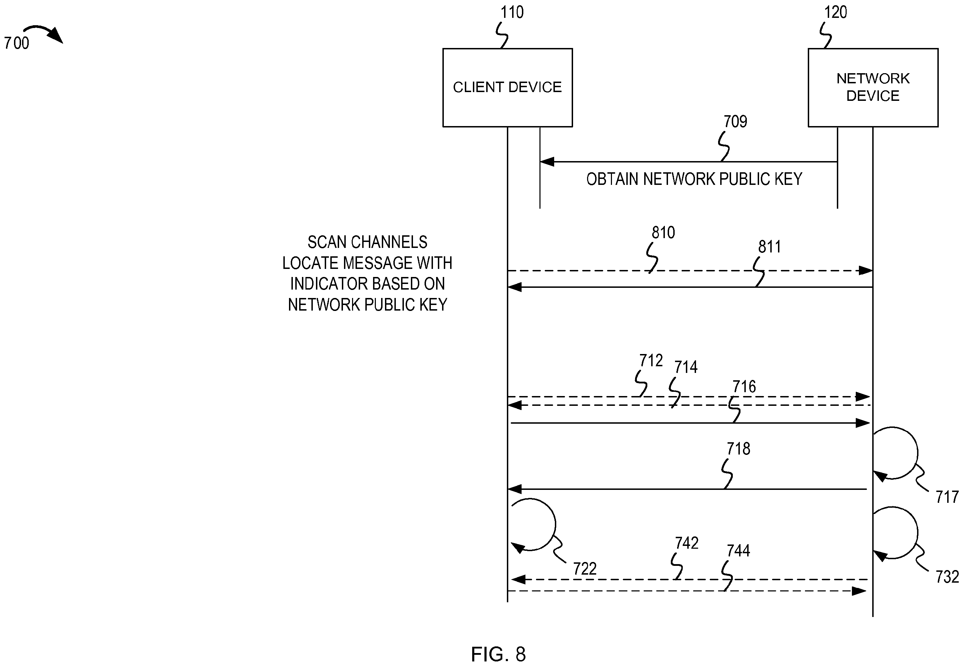

**Figure** 8 depicts another example of device provisioning in which a client device 110 and a network device 120 are illustrated. The client device 110 may obtain (at 709) the network public key of the network device 120. In Figure 8, the network public key is obtained via an out-of-band medium. For example, the client device 110 may scan a QR code associated with the network device 120, wherein the QR code includes the network public key encoded in the image. The network device 120 may include the network public key (or a derivative of it) in a first message 811 from the network device 120. For example, the first message 811 may be a service advertisement message, a probe response, an overhead message, or a beacon message. In one embodiment, a derivative (such as a hash) of the network public key may be included in the first message 811. The client device 110 may passively scan a plurality of channels until identifying a channel with the first message 811 having the network public key (or derivative). In this way, the client device 110 can identify the proper channel to continue the provisioning process. The provisioning process (shown at 712-744) may be similar to the process described in Figure 7.

In another embodiment of Figure 8, the client device 110 may use an active scan at a plurality of channels to identify a channel managed by the network device 120. The client device 110 may send a probe request message 810 and receive a probe response (as the first message 811). If the probe response includes the network public key (or a derivative of the network public key), the client device 110 may identify that channel as the proper channel to continue the device provisioning.

As described above, the messages described in Figures 7-8 could be used for various scenarios, including the establishment of a trust relationship for a configurator device, the creation of a peer-to-peer network, or the connection of a new client device to a network. In Figure 7, after an initial discovery process, two devices exchange public keys. The public keys are used with private keys on each device to determine a derivative key used for provisioning one device for the other device. As noted in previous figures, a third device (e.g., configurator device 130) may be used as an intermediary between the first and second devices (e.g., client device 110 and network device 120). The following Figures provide further examples of an intermediary device that performs similar features as described above with regard to configurator device 130.

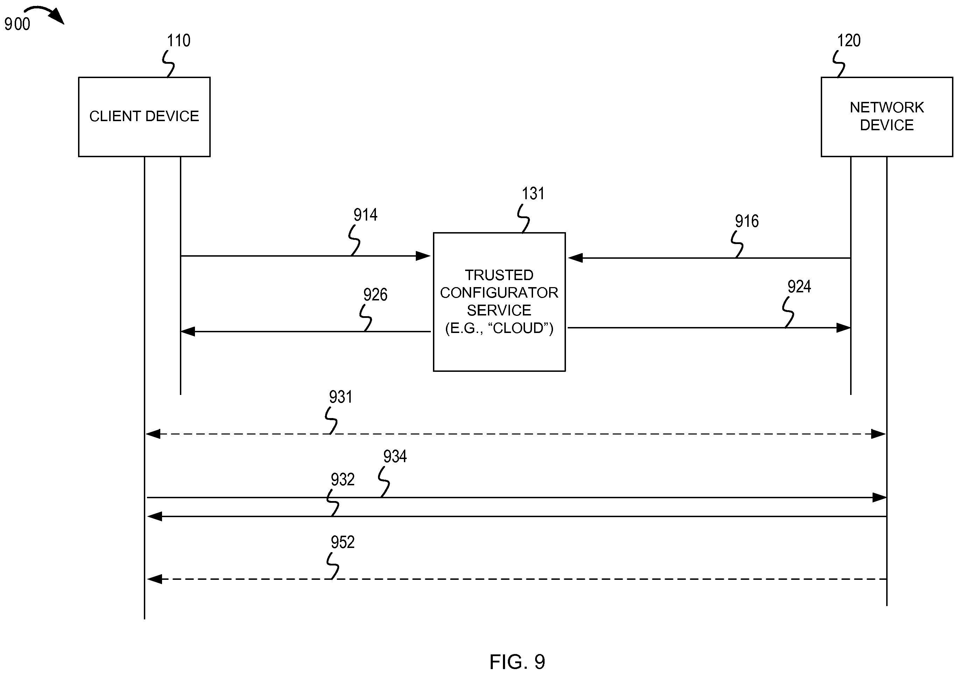

**Figure 9** depicts an example system 900 in which the functionality of a configurator device may be implemented in a trusted configurator service 131 such as a network based (e.g., "cloud) service. Figure 9 includes a client device 110 and network device 120. Initially, the client device 110 is considered not enrolled with the network device 120.

Using an out-of-band communication medium, the client device 110 may provide the client public key (in first message 914) to the trusted configurator service 131. The trusted configurator service 131 may provide the client public key (in second message 924) to the network device 120. Similarly, the network device 120 may provide the network public key (in third message 916) to the trusted configurator service 131. The trusted configurator service 131 may provide the network public key (in fourth message 926) to the client device 110.

The trusted configurator service 131 may serve as a public key clearinghouse or key authority. In one embodiment, the client device 110 and network device 120 may provide the client public key and network public key, respectively, prior to any potential association between the client device 110 and network device 120. For example, the trusted configurator service 131 may be a cloud-based repository storing the public keys of multiple client devices and network devices, such that a relationship can be established between a particular client device and particular network device simply by managing the distribution of the public keys.

In one embodiment, the trusted configurator service 131 may establish a trust relationship with one or both of the client device 110 and network device 120. The client public key and network public key could be provided using a secure communications link in accordance with the trust relationship.

Either the client device 110 or network device 120 may initiate the enrollment process 931 based on the received public key from the trusted configurator service 131. The enrollment process 931 may include the discovery steps, as described in Figures 4-8. Following the discovery steps, the client device 110 may initiate the authentication process by sending an authentication request message 934 to the network device 120. The authentication request message 934 may include a client-provided nonce, and optionally may include additional information regarding the client device 110. The network device 120 may generate a network-provided nonce, and use the network-provided nonce, client-provided nonce, the network private key, and the client public key (from the trusted configurator service 131) to determine the shared key. In the authentication response message 932, the network device 120 may include the network-provided nonce as well as a MAC based at least in part on the shared key.

The client device 110 may use the network-provided nonce, client-provided nonce, client private key, and network public key to determine the same shared key. The shared key is verified by generating a MAC and comparing the client-generated MAC with the received MAC.

Following enrollment and authentication, the network device 120 may provide configuration data 952 to the client device 110. Additionally, additional authentication (such as a 4-way handshake or establishment of a PMK) may be performed (not shown).

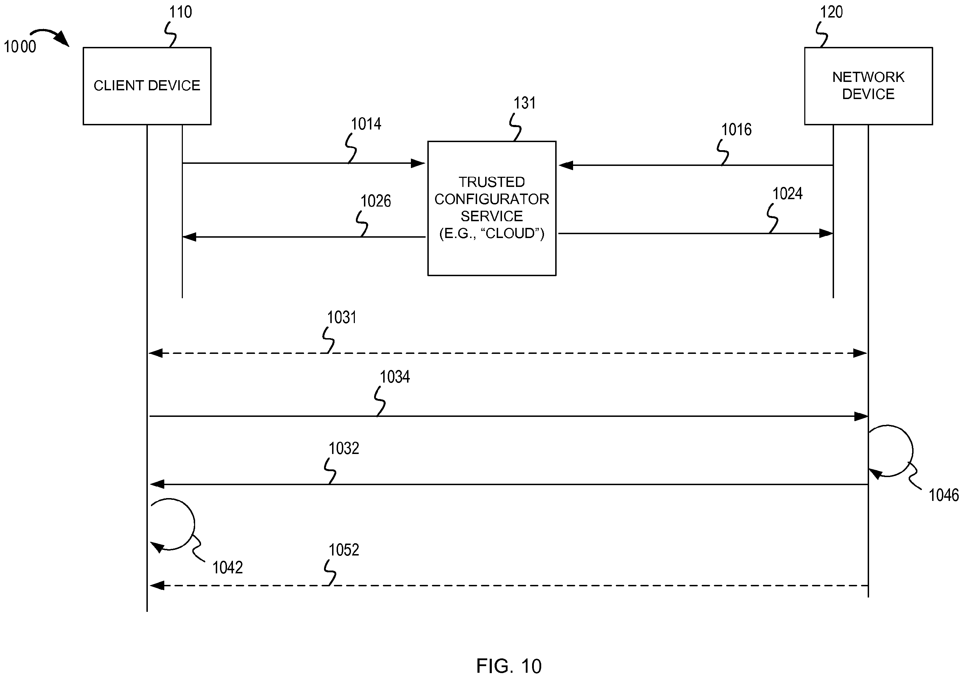

**Figure 10** depicts another example system 1000 in which a configurator service 131 may assist with authentication between a client device 110 and network device 120. In one example, the configurator service 131 may be a trusted service (e.g., in the cloud). In an embodiment, the trusted configurator service 131 may provide additional trust certification of the client public key and network public key. A certification includes the "signing" or certification of a parcel of information by encrypting the parcel of information using a private key. As a result of the certification process, a "certificate" may be generated.

Using an out-of-band communication medium, the client device 110 may provide the client public key (in first message 1014) to the trusted configurator service 131. The trusted configurator service 131 may sign the client public key using a configurator private key to generate a client certificate. The client certificate can be verified using the configurator public key which may be known to the client device and the network device.

Similarly, the network device 120 may provide the network public key (in second message 1016) to the trusted configurator service 131. The trusted configurator service 131 may also generate a network certificate by signing the network public key with the configurator private key.

The trusted configurator service 131 may send the configurator public key and the network certificate in third message 1024 to the network device 120. The configurator public key may also be referred to as a certificate authority (CA) public key. The trusted configurator service 131 may send the configurator public key and the client certificate in fourth message 1026 to the client device 110. Therefore, each of the client device and network device will have the configurator public key, as well as a configurator-certified copy of their own public key. Each of the client certificate and network certificate may include a signature provided by the trusted configurator service 131. The signature may be computed based on a portion of the certificate and the configurator private key. For example, a data portion of the certificate may be used to create a message digest or hash. The message digest or hash may then be encrypted using a configurator private key to produce the signature. The signature may be added as a second portion of the certificate.

Either the client device 110 or network device 120 may initiate enrollment responsive to receiving the configurator-certified copy of their own public key and verifying the authenticity of the signature. The enrollment may begin with discovery steps 1031 to establish an initial communication channel between the client device 110 and the network device 120 over which an authentication protocol may be used. The authentication protocol may include an authentication request message 1034 and authentication response message 1032.

The client device 110 may include the client certificate and a client-provided nonce in the authentication request message 1034. Upon receiving the client certificate, the network device 120 may verify the client certificate at verification procedure 1046. For example, the network device 120 may use a configurator public key to verify the client certificate. To verify that the certificate was issued by the trusted configurator service 131, a recipient device may use the configurator public key to decrypt the signature to obtain the signature message digest or hash. The recipient device can then compute a received message digest or hash from the data portion and compare the received message digest/hash with the signature message digest/hash. The network device 120 can determine the shared key. For example, the network device 120 may generate a network-provided nonce and determine the shared key using the client-provided nonce, the client public key extracted from the client certificate, the network private key, and the network-provided nonce.

In the authentication response message 1032, the network device 120 may include the network-provided nonce, the network certificate, and a MAC of the client-provided nonce. The MAC of the client-provided nonce may be a cryptographic hash function of the client-provided nonce that has been prepared using the shared key.

At verification procedure 1042, the client device may verify the network certificate using the configurator public key. If verified, the client device 110 can use the network public key stored in the network certificate and generate the same shared key using the network-provided nonce, client-provided nonce, network public key, and client public key, using a similar process used by the network device 120.

Once the shared key has been obtained, the client device 110 and network device 120 may use the shared key for subsequent 4-way handshake authentication and/or configuration steps 1052.

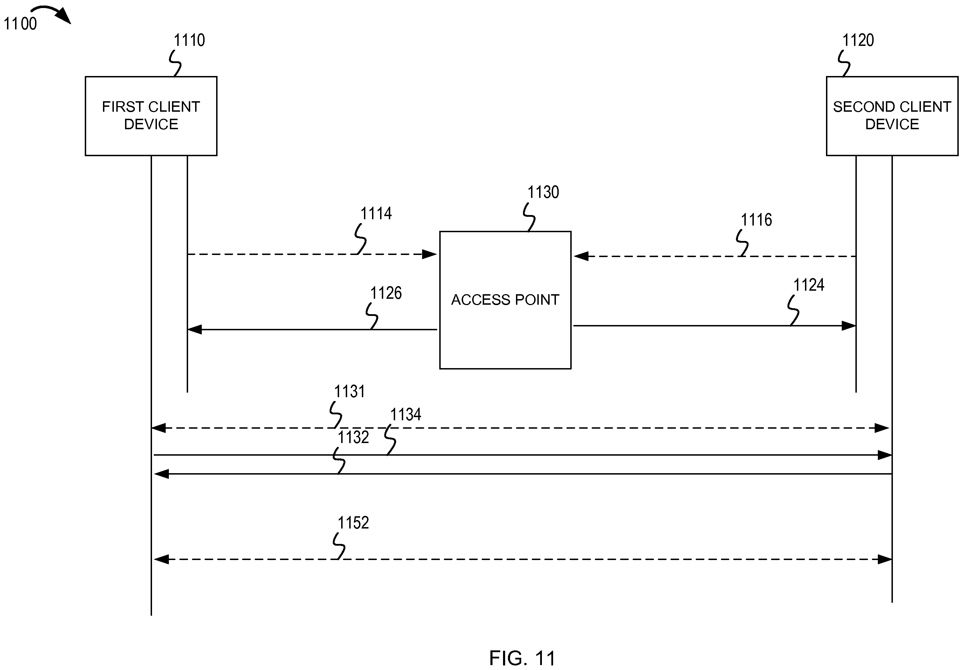

**Figure 11** depicts another example system 1100 in which a configurator device may be embodied as an access point 1130 to facilitate a direct peer-to-peer wireless connection between a first client device 1110 and a second client device 1120. Initially, the first client device 1110 and the second client device 1120 may have a wireless association with access point 1130 but may not have a direct peer-to-peer wireless association with each other.

The access point 1130 may be configured to provide public keys to the first and second client devices 1110, 1120. In one embodiment, the access point 1130 may obtain the first client public key (in first message 1114) from the first client device 1110 and provide the first client public key (in second message 1124) to the second client device 1120. The access point 1130 may obtain the second client public key (in third message) 1116 from the second client device 1120 and provide the second client public key (in fourth message 1126) to the first client device 1110. In another embodiment, the access point 1130 may be configured to generate one or more ephemeral client public keys and provide them to the first and second client devices 1110, 1120. For example, the access point 1130 may generate a first client public key and send the first client public key to the second client device 1120. The access point 1130 may generate a second client public key and send the second client public key to the first client device 1110. Either, or both, of the first client public key and second client public key can be ephemeral client public keys generated by the access point 1130.

Either the first client device 1110 or second client device 1120 may initiate the enrollment process 1131 based on the received client public keys from the access point 1130. In one example, the first client device 1110 may initiate the authentication process by sending an authentication request message 1134 to the second client device 1120. The authentication request message 1134 may include a first nonce, and optionally may include additional information regarding the first client device 1110. The second client device 1120 may generate a second nonce, and use the second nonce, first nonce, and the first client public key to determine a shared key. In the authentication response message 1132, the second client device 1120 may include the second nonce as well as a MAC based at least in part on the shared key.

The first client device 1110 may use the first nonce, second nonce, and the second client public key 1126 to determine the same shared key. The shared key is verified by generating a verification MAC and comparing the verification MAC with the received MAC.

Following enrollment and authentication, the second client device 1120 or the first client device 1110 may provide configuration data 1152 for the peer-to-peer wireless connection. Additionally, additional authentication (such as a 4-way handshake or establishment of a PMK) may be performed (not shown).

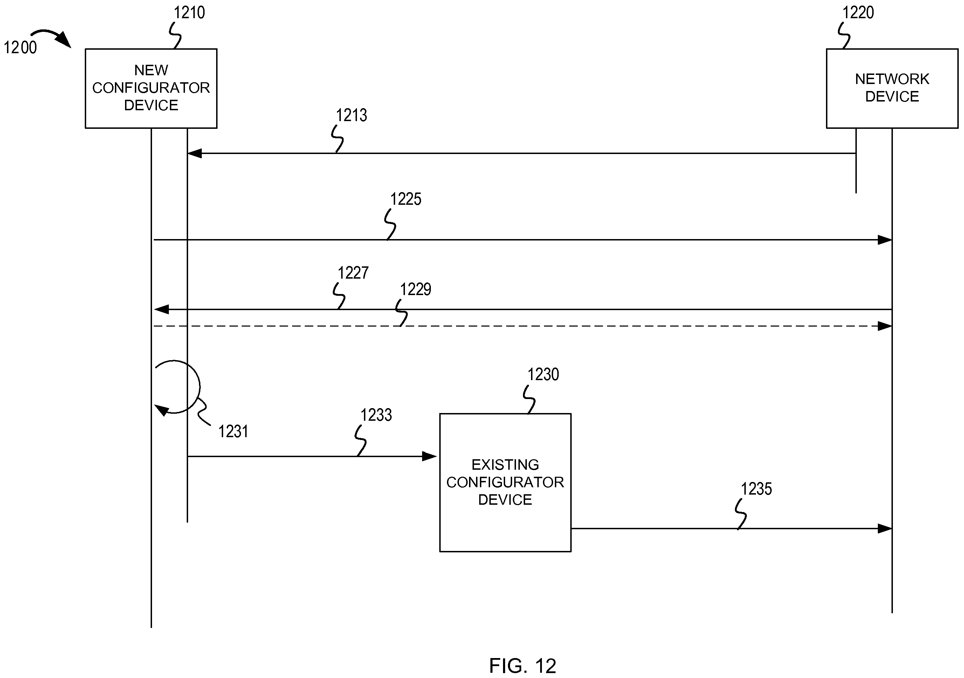

**Figure 12** is a message process diagram 1200 illustrating adding a new configurator device 1210 to a network, where an existing configurator device 1230 is already present. The network includes a network device 1220 which can provide a network public key 1213 via an out-of-band medium to the new configurator device 1210. For example, the new configurator device 1210 may scan a QR code associated with the network device 1220. The new configurator device 1210 may include the network public key in an enrollment message 1225 to the network device 1220. The network device 1220 may determine that an existing configurator device is already present and may send a response message 1227 indicating that an existing configurator device 1230 has already been provisioned. In one embodiment, the response message 1227 may provide an indicator (e.g., name or location) of the existing configurator device 1230. The new configurator device 1210 may optionally send an acknowledgement 1229 in reply to the response message 1227.

The new configurator device 1210 may provide a QR code 1231 and instruct the user to have the QR code scanned by the existing configurator device 1230. The QR code may have a device public key associated with the new configurator device 1210. The device public key is provided to the existing configurator device 1230 (e.g., the existing configurator device 1230 scans 1233 the QR code provided by the new configurator device 1210). The existing configurator device 1230 may provide the device public key (in trusted message 1235) to the network device 1220 using an existing trust relationship between the existing configurator device 1230 and the network device 1220. In response to receiving the device public key, the network device 1220 may enroll the new configurator device 1210 and add it to a list of configurator devices.

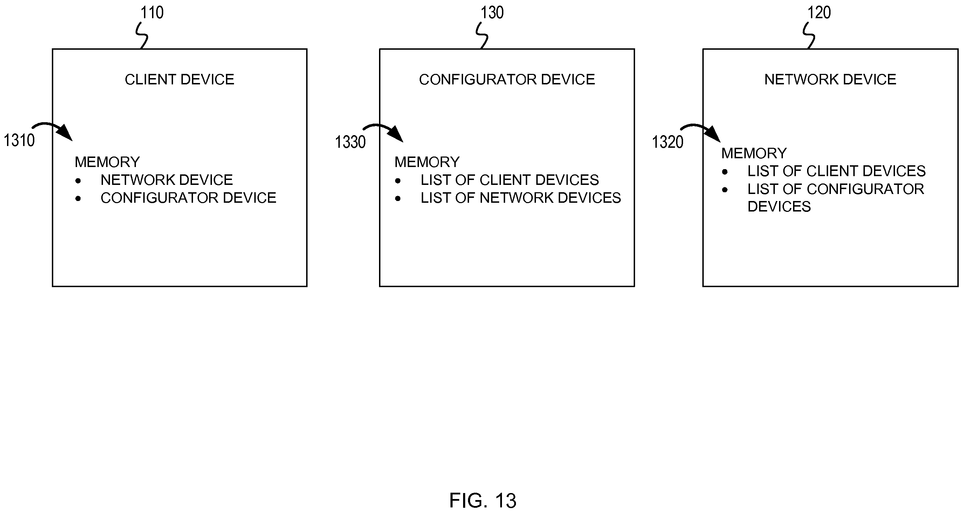

**Figure 13** is a conceptual diagram illustrating public key lists that may be maintained by various devices in accordance with an embodiment of this disclosure. In Figure 13, the client device 110 may have memory 1310 for storing the public keys associated with at least one network device. The memory 1310 may also store the public key of a configurator device. In one embodiment, the memory 1310 may store public keys for more than one network device, such as when the client device 110 is provisioned for accessing different networks based on coverage or user selection.

The configurator device 130 may have memory 1330 for storing public keys for a list of client devices that are provisioned for the network. The list of client devices may be shared with a new network device (not shown) when a new network device is added to the network. The memory 1330 may also store the public keys for a list of network devices associated with the network. The public keys for the list of network devices may be used to verify requests from a network device.

The network device 120 may have memory 1320 for storing public keys associated with a list of client devices and public keys for a list of configurator devices. When a new network device is added to the network, the public keys for the list of client devices may be shared to the new network device so that the new network device can automatically enroll the client devices. The public keys for the list of configurator devices can also be shared with a new network device so that the new network device can verify enrollment requests received by configurator devices of the network.

Using the examples in Figure 13, it can be understood that the lists (and associated public keys) may be used to manage access in a network. For example, when a user causes a client device to be removed from the list of client devices at a configurator device, the changes may be propagated to other configurator devices and network devices. Using Figure 13 as the example, the configurator device 130 may send a message to the network device 120 to cause the network device 120 to remove the public key for client device 110 from the list of client devices in memory 1320. Thereafter, the client device 110 would not be provisioned for the network.

Figures 1-13 and the operations described herein are examples meant to aid in understanding various embodiments and should not be used to limit the scope of the claims. Embodiments may perform additional operations, fewer operations, operations in parallel or in a different order, and some operations differently. While this disclosure enumerates several embodiments, additional embodiments are considered within the scope of this disclosure. For example, in one embodiment, a method for authenticating a client device with a network device comprises facilitating, via a configurator device, an authentication between the client device and the network device, the authentication based at least in part on a client public key of the client device shared from the client device to the network device via the configurator device, the configurator device using out-of-band communications to obtain the client public key.

As will be appreciated by one skilled in the art, aspects of the present disclosure may be embodied as a system, method, or computer program product. Accordingly, aspects of the present disclosure may take the form of an entirely hardware embodiment, a software embodiment (including firmware, resident software, micro-code, etc.) or an embodiment combining software and hardware aspects that may all generally be referred to herein as a "circuit," "unit" or "system." Furthermore, aspects of the present disclosure may take the form of a computer program product embodied in one or more computer readable medium(s) having computer readable program code embodied thereon.

Any combination of one or more computer readable medium(s) may be utilized, with the sole exception being a transitory, propagating signal. The computer readable medium may be a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Computer program code embodied on a computer readable medium for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described with reference to flowchart illustrations and/or block diagrams of methods, apparatus (systems) and computer program products according to embodiments of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks. The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

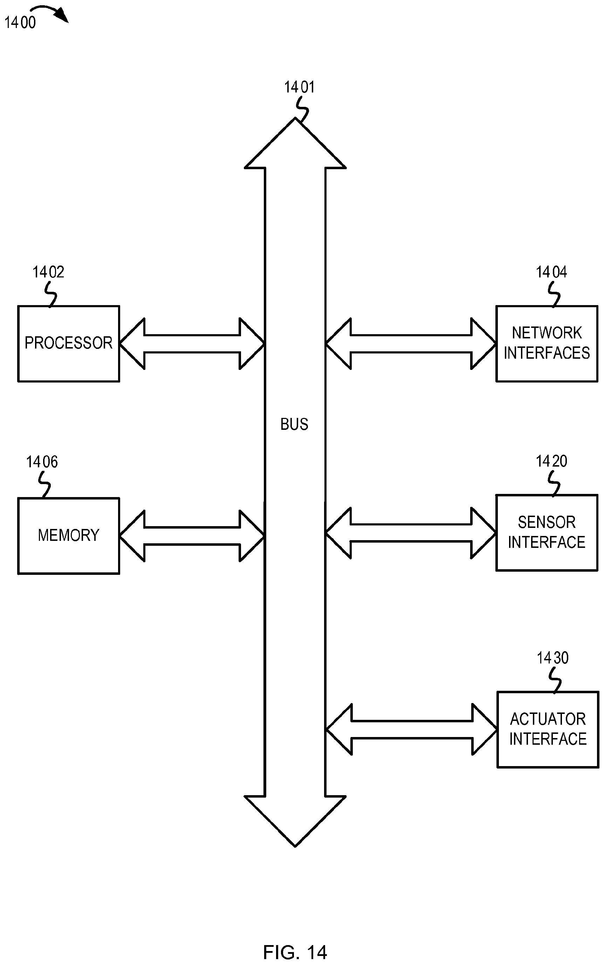

**Figure 14** is an example block diagram of one embodiment of an electronic device 1400 capable of implementing various embodiments of this disclosure. In some implementations, the electronic device 1400 may be an electronic device such as a laptop computer, a tablet computer, a mobile phone, a gaming console, or other electronic system. The electronic device 1400 includes a processor 1402 (possibly including multiple processors, multiple cores, multiple nodes, and/or implementing multi-threading, etc.). The electronic device 1400 includes a memory 1406. The memory 1406 may be system memory (e.g., one or more of cache, SRAM, DRAM, zero capacitor RAM, Twin Transistor RAM, eDRAM, EDO RAM, DDR RAM, EEPROM, NRAM, RRAM, SONOS, PRAM, etc.) or any one or more of the above already described possible realizations of machine-readable media. The electronic device 1400 also includes a bus 1401 (e.g., PCI, ISA, PCI-Express, HyperTransport®, InfiniBand®, NuBus, AHB, AXI, etc.). The electronic one or more network interfaces that may be a wireless network interface (e.g., a WLAN interface, a Bluetooth® interface, a WiMAX interface, a ZigBee® interface, a Wireless USB interface, etc.) or a wired network interface (e.g., a powerline communication interface, an Ethernet interface, etc.). In some implementations, electronic device 1400 may support multiple network interfaces 1404 - each of which may be configured to couple the electronic device 1400 to a different communication network.

The memory 1406 embodies functionality to implement embodiments described above. The memory 1406 may include one or more functionalities that facilitate assisted enrollment and authentication. For example, memory 1406 can implement one or more aspects of client device 110, network device 120, or configurator device 130 as described above. The memory 1406 can embody functionality to implement embodiments described in Figures 1 - 13 above. In one embodiment, memory 1406 can include one or more functionalities that facilitate sending and receiving keys, authentication messages, and the like.

The electronic device 1400 may also include a sensor interface 1420, actuator interface 1430 or other input/output component. In other embodiments, electronic device 1400 may have other appropriate sensors (e.g., a camera, microphone, NFC detector, barcode scanner, etc.) used to determine the network public key and/or the client public key.

Any one of these functionalities may be partially (or entirely) implemented in hardware and/or on the processor 1402. For example, the functionality may be implemented with an application specific integrated circuit, in logic implemented in the processor 1402, in a co-processor on a peripheral device or card, etc. Further, realizations may include fewer or additional components not illustrated in Figure 14 (e.g., video cards, audio cards, additional network interfaces, peripheral devices, etc.). The processor 1402, and the memory 1406, may be coupled to the bus 1401. Although illustrated as being coupled to the bus 1401, the memory 1406 may be directly coupled to the processor 1402.

While the embodiments are described with reference to various implementations and exploitations, it will be understood that these embodiments are illustrative and that the scope of the present disclosure is not limited to them. In general, techniques for device provisioning as described herein may be implemented with facilities consistent with any hardware system or hardware systems. Many variations, modifications, additions, and improvements are possible.

Plural instances may be provided for components, operations or structures described herein as a single instance. Finally, boundaries between various components, operations and data stores are somewhat arbitrary, and particular operations are illustrated in the context of specific illustrative configurations. Other allocations of functionality are envisioned and may fall within the scope of the present disclosure. In general, structures and functionality presented as separate components in the exemplary configurations may be implemented as a combined structure or component. Similarly, structures and functionality presented as a single component may be implemented as separate components.

## Claims

1. A method performed by a configurator device (130) for enrollment of a client device (110) with a network, the method comprising:
establishing a trust relationship (225) with a network device (120) of the network;
determining a client public key associated with the client device prior to an enrollment procedure between the client device and the network device; and
sending, from the configurator device to the network device in accordance with the trust relationship, the client public key to facilitate the enrollment procedure, wherein the enrollment procedure comprises at least a first authentication between the network device and the client device based, at least in part, on the client public key.

2. The method of claim 1, further comprising:
sending, from the configurator device or the network device to the client device, a network public key associated with the network device, wherein the first authentication is further based, at least in part, on the network public key.

3. The method of claim 1, wherein establishing the trust relationship comprises:
determining a network public key associated with the network device;
sending a configurator public key to the network device, the configurator public key corresponding to a configurator private key; and
determining a trust relationship key associated with the trust relationship based, at least in part, on the network public key and the configurator private key;
wherein determining the network public key associated with the network device preferably comprises:
receiving the network public key via a secure connection with the network device, or
determining the network public key via an out-of-band connection with the network device that is different from a connection that the client device will establish with the network device, or
detecting the network public key using at least one member of the group consisting of a camera, a microphone, a light detector, a sensor, and a short-range radio frequency interface of the configurator device, wherein detecting the network public key using the camera preferably comprises using the camera to detect an image associated with the network device, wherein at least a portion of the image includes the network public key;
wherein establishing the trust relationship preferably comprises receiving a configurator support service advertisement from the network device prior to determining the network public key associated with the network device.

4. The method of claim 3, further comprising:
encrypting the client public key with the trust relationship key prior to sending the client public key from the configurator device to the network device.

5. The method of claim 1, wherein determining the client public key associated with the client device comprises:
detecting the client public key using at least one member of the group consisting of a camera, a microphone, a light detector, a sensor, and a short-range radio frequency interface of the configurator device;
wherein detecting the client public key using the camera preferably comprises using the camera to detect an image associated with the client device.

6. The method of claim 1, wherein sending the client public key associated with the client device comprises:
sending a request message to the network device;
receiving a nonce from the network device; and
sending an enrollment message to the network device, the enrollment message including the client public key and a configurator signature derived, at least in part, from the nonce and a configurator private key, wherein the configurator signature provides a second authentication to the network device that the configurator device is authorized to send the enrollment message;
wherein the configurator signature is preferably either derived from the nonce and a configurator private key or is based, at least in part, on a trust relationship key associated with the trust relationship;
wherein the method preferably further comprises:
receiving an enrollment key from the network device; and
sending the enrollment key to the client device, wherein the enrollment key is used with the client public key for the first authentication between the network device and the client device.

7. The method of claim 1, further comprising:
sending configuration data from the configurator device to the network device after establishing the trust relationship.

8. The method of claim 1, further comprising:
sending configuration data from the configurator device to the client device to aid the client device in associating with the network device;
wherein sending the configuration data preferably comprises transmitting a first message on a default channel accessible by the client device;
wherein the first message preferably includes identity information based, at least in part, on either the client public key or a network public key associated with the network device.

9. The method of claim 1, wherein the client device is a first client device, the network device is a second client device, and the configurator device is an access point; or
wherein the network device is an access point of the network, and wherein the configurator device is associated with the access point.

10. A method performed by a network device (120) for enrollment of a client device (110) with a network, the method comprising:
establishing, at the network device, a trust relationship (225) with a configurator device (130) receiving, from the configurator device in accordance with the trust relationship, a client public key associated with the client device prior to an enrollment procedure between the client device and the network device; and
using the client public key for the enrollment procedure, wherein the enrollment procedure comprises at least a first authentication between the network device and the client device based, at least in part, on the client public key.

11. A method performed by a client device (110) for enrollment with a network, the method comprising:
providing, to a configurator device (130) having a trust relationship (225) with a network device (120) of the network, a client public key associated with the client device prior to an enrollment procedure between the client device and the network device;
receiving, from the configurator device, a first nonce and a network public key associated with the network device;
generating a second nonce;
determining a shared key based, at least in part, on the first nonce, the second nonce, the network public key, and a client private key associated with the client device, wherein the client private key corresponds to the client public key; and
using the shared key for the enrollment procedure, wherein the enrollment procedure comprises at least a first authentication between the network device and the client device based, at least in part, on the shared key.

12. A configurator device adapted for performing a method according to any of the preceding claims 1-9.

13. A network device adapted for performing a method according to claim 10.

14. A client device adapted for performing a method according to claim 11.

15. A computer program product comprising instructions for implementing a method according to any of the preceding claims 1-9, 10 and/or 11.

## Patentansprüche

1. Ein von einer Konfiguratorvorrichtung (130) durchgeführtes Verfahren zur Registrierung einer Clientvorrichtung (110) in einem Netzwerk, wobei das Verfahren umfasst:
Aufbauen einer Vertrauensbeziehung (225) mit einer Netzwerkvorrichtung (120) des Netzwerks;
Bestimmen eines mit der Clientvorrichtung assoziierten öffentlichen Clientschlüssels vor einer Registrierungsprozedur zwischen der Clientvorrichtung und der Netzwerkvorrichtung; und
Senden, von der Konfiguratorvorrichtung zu der Netzwerkvorrichtung gemäß der Vertrauensbeziehung, des öffentlichen Clientschlüssels zum Ermöglichen der Registrierungsprozedur, wobei die Registrierungsprozedur zumindest eine erste Authentifizierung zwischen der Netzwerkvorrichtung und der Clientvorrichtung basierend zumindest zum Teil auf dem öffentlichen Clientschlüssel umfasst.

2. Das Verfahren nach Anspruch 1, ferner umfassend:
Senden, von der Konfiguratorvorrichtung oder der Netzwerkvorrichtung zu der Clientvorrichtung, eines mit der Netzwerkvorrichtung assoziierten öffentlichen Netzwerkschlüssels, wobei die erste Authentifizierung ferner zumindest zum Teil auf dem öffentlichen Netzwerkschlüssel basiert.

3. Das Verfahren nach Anspruch 1, wobei das Aufbauen der Vertrauensbeziehung umfasst:
Bestimmen eines mit der Netzwerkvorrichtung assoziierten öffentlichen Netzwerkschlüssels;
Senden eines öffentlichen Konfiguratorschlüssels zu der Netzwerkvorrichtung, wobei der öffentliche Konfiguratorschlüssel mit einem privaten Konfiguratorschlüssel korrespondiert; und
Bestimmen eines mit der Vertrauensbeziehung assoziierten Vertrauensbeziehungsschlüssels basierend zumindest zum Teil auf dem öffentlichen Netzwerkschlüssel und dem privaten Konfiguratorschlüssel;
wobei das Bestimmen des mit der Netzwerkvorrichtung assoziierten öffentlichen Netzwerkschlüssels vorzugsweise umfasst:
Empfangen des öffentlichen Netzwerkschlüssels über eine sichere Verbindung mit der Netzwerkvorrichtung, oder
Bestimmen des öffentlichen Netzwerkschlüssels mittels einer Out-of-Band-Verbindung mit der Netzwerkvorrichtung, welche sich von einer Verbindung, welche die Clientvorrichtung mit der Netzwerkvorrichtung aufbauen wird, unterscheidet, oder
Detektieren des öffentlichen Netzwerkschlüssels unter Verwendung von zumindest einem Mitglied der Gruppe bestehend aus einer Kamera, einem Mikrofon, einem Lichtdetektor, einem Sensor und einer Kurzstreckenfunkfrequenzschnittstelle der Konfiguratorvorrichtung, wobei das Detektieren des öffentlichen Netzwerkschlüssels unter Verwendung der Kamera vorzugsweise ein Verwenden der Kamera zum Detektieren eines mit der Netzwerkvorrichtung assoziierten Bildes umfasst, wobei zumindest ein Teil des Bildes den öffentlichen Netzwerkschlüssel enthält;
wobei das Aufbauen der Vertrauensbeziehung vorzugsweise ein Abrufen einer Konfiguratorunterstützungsdienstanzeige von der Netzwerkvorrichtung vor dem Bestimmen des mit der Netzwerkvorrichtung assoziierten öffentlichen Netzwerkschlüssels umfasst.

4. Das Verfahren nach Anspruch 3, ferner umfassend:
Verschlüsseln des öffentlichen Clientschlüssels mit dem Vertrauensbeziehungsschlüssel vor dem Senden des öffentlichen Clientschlüssels von der Konfiguratorvorrichtung zu der Netzwerkvorrichtung.

5. Das Verfahren nach Anspruch 1, wobei das Bestimmen des mit der Clientvorrichtung assoziierten öffentlichen Clientschlüssels umfasst:
Detektieren des öffentlichen Clientschlüssels unter Verwendung von zumindest einem Mitglied der Gruppe bestehend aus einer Kamera, einem Mikrofon, einem Lichtdetektor, einem Sensor und einer Kurzstreckenfunkfrequenzschnittstelle der Konfiguratorvorrichtung;
wobei das Detektieren des öffentlichen Clientschlüssels unter Verwendung der Kamera vorzugsweise ein Verwenden der Kamera zum Detektieren eines mit der Clientvorrichtung assoziierten Bildes umfasst.

6. Das Verfahren nach Anspruch 1, wobei das Senden des mit der Clientvorrichtung assoziierten öffentlichen Clientschlüssels umfasst:
Senden einer Anfragenachricht zu der Netzwerkvorrichtung;
Empfangen einer Nonce von der Netzwerkvorrichtung; und
Senden einer Registrierungsnachricht zu der Netzwerkvorrichtung, wobei die Registrierungsnachricht den öffentlichen Clientschlüssel und eine Konfiguratorsignatur, welche zumindest zum Teil von der Nonce und einem privaten Konfiguratorschlüssel abgeleitet ist, aufweist, wobei die Konfiguratorsignatur eine zweite Authentifizierung für die Netzwerkvorrichtung bereitstellt, wonach die Konfiguratorvorrichtung autorisiert ist zum Senden der Registrierungsnachricht;
wobei die Konfiguratorsignatur vorzugsweise entweder von der Nonce und einem privaten Konfiguratorschlüssel abgeleitet ist oder zumindest zum Teil auf einem mit der Vertrauensbeziehung assoziierten Vertrauensbeziehungsschlüssel basiert;
wobei das Verfahren vorzugsweise ferner umfasst:
Empfangen eines Registrierungsschlüssels von der Netzwerkvorrichtung; und
Senden des Registrierungsschlüssels an die Clientvorrichtung, wobei der Registrierungsschlüssel mit dem öffentlichen Clientschlüssel für die erste Authentifizierung zwischen der Netzwerkvorrichtung und der Clientvorrichtung verwendet wird.

7. Das Verfahren nach Anspruch 1, ferner umfassend:
Senden von Konfigurationsdaten von der Konfiguratorvorrichtung zu der Netzwerkvorrichtung nach dem Aufbau der Vertrauensbeziehung.

8. Das Verfahren nach Anspruch 1, ferner umfassend:
Senden von Konfigurationsdaten von der Konfiguratorvorrichtung zu der Clientvorrichtung zum Helfen der Clientvorrichtung beim Assoziieren mit der Netzwerkvorrichtung;
wobei das Senden der Konfigurationsdaten vorzugweise ein Übertragen einer ersten Nachricht auf einem der Clientvorrichtung zugänglichen Standardkanal umfasst;
wobei die erste Nachricht vorzugsweise Identitätsinformationen basierend zumindest zum Teil auf entweder dem öffentlichen Clientschlüssel oder einem mit der Netzwerkvorrichtung assoziierten öffentlichen Netzwerkschlüssel umfasst.

9. Das Verfahren nach Anspruch 1, wobei die Clientvorrichtung eine erste Clientvorrichtung ist, wobei die Netzwerkvorrichtung eine zweite Clientvorrichtung ist und wobei die Konfiguratorvorrichtung ein Zugangspunkt ist; oder
wobei die Netzwerkvorrichtung ein Zugangspunkt des Netzwerks ist, und wobei die Konfiguratorvorrichtung mit dem Zugangspunkt assoziiert ist.

10. Ein von einer Netzwerkvorrichtung (120) durchgeführtes Verfahren zur Registrierung einer Clientvorrichtung (110) in einem Netzwerk, wobei das Verfahren umfasst:
Aufbauen, an der Netzwerkvorrichtung, einer Vertrauensbeziehung (225) mit einer Konfiguratorvorrichtung (130);
Empfangen, von der Konfiguratorvorrichtung gemäß der Vertrauensbeziehung, eines mit der Clientvorrichtung assoziierten öffentlichen Clientschlüssels vor einer Registrierungsprozedur zwischen der Clientvorrichtung und der Netzwerkvorrichtung; und
Verwenden des öffentlichen Clientschlüssels für die Registrierungsprozedur, wobei die Registrierungsprozedur zumindest eine erste Authentifizierung zwischen der Netzwerkvorrichtung und der Clientvorrichtung basierend zumindest zum Teil auf dem öffentlichen Clientschlüssel umfasst.

11. Ein von einer Clientvorrichtung (110) durchgeführtes Verfahren zur Registrierung in einem Netzwerk, wobei das Verfahren umfasst:
Bereitstellen, an eine Konfiguratorvorrichtung (130), welche eine Vertrauensbeziehung (225) mit einer Netzwerkvorrichtung (120) des Netzwerks hat, eines mit der Clientvorrichtung assoziierten öffentlichen Clientschlüssels vor einer Registrierungsprozedur zwischen der Clientvorrichtung und der Netzwerkvorrichtung;
Empfangen, von der Konfiguratorvorrichtung, einer ersten Nonce und eines mit der Netzwerkvorrichtung assoziierten öffentlichen Netzwerkschlüssels;
Erzeugen einer zweiten Nonce;
Bestimmen eines gemeinsamen Schlüssels basierend zumindest zum Teil auf der ersten Nonce, der zweiten Nonce, dem öffentlichen Netzwerkschlüssel und einem mit der Clientvorrichtung assoziierten privaten Clientschlüssel, wobei der private Clientschlüssel mit dem öffentlichen Clientschlüssel korrespondiert; und
Verwenden des gemeinsamen Schlüssels für die Registrierungsprozedur, wobei die Registrierungsprozedur zumindest eine erste Authentifizierung zwischen der Netzwerkvorrichtung und der Clientvorrichtung basierend zumindest zum Teil auf dem gemeinsamen Schlüssel umfasst.

12. Eine Konfiguratorvorrichtung, angepasst zum Durchführen eines Verfahrens nach irgendeinem der vorstehenden Ansprüche 1-9.

13. Eine Netzwerkvorrichtung, angepasst zum Durchführen eines Verfahrens nach Anspruch 10.

14. Eine Clientvorrichtung, angepasst zum Durchführen eines Verfahrens nach Anspruch 11.

15. Ein Computerprogrammprodukt mit Anweisungen zum Implementieren eines Verfahrens nach irgendeinem der vorstehenden Ansprüche 1-9, 10 und/oder 11.

## Revendications

1. Procédé mis en oeuvre par un dispositif configurateur (130) pour l'inscription d'un dispositif client (110) auprès d'un réseau, le procédé comprenant :
l'établissement d'une relation de confiance (225) avec un dispositif réseau (120) du réseau ;
la détermination d'une clé publique de client associée au dispositif client avant une procédure d'inscription entre le dispositif client et le dispositif réseau ; et
l'envoi, du dispositif configurateur au dispositif réseau conformément à la relation de confiance, la clé publique de client étant destinée à faciliter la procédure d'inscription, dans lequel la procédure d'inscription comprend au moins une première authentification entre le dispositif réseau et le dispositif client sur la base, au moins en partie, de la clé publique de client.

2. Procédé selon la revendication 1, comprenant en outre :
l'envoi, du dispositif configurateur ou du dispositif réseau au dispositif client, d'une clé publique de réseau associée au dispositif réseau, dans lequel la première authentification est basée en outre, au moins en partie, sur la clé publique de réseau.

3. Procédé selon la revendication 1, dans lequel l'établissement de la relation de confiance comprend :
la détermination d'une clé publique de réseau associée au dispositif réseau ;
l'envoi d'une clé publique de configurateur au dispositif réseau, la clé publique de configurateur correspondant à une clé privée de configurateur ; et
la détermination d'une clé de relation de confiance associée à la relation de confiance sur la base, au moins en partie, de la clé publique de réseau et de la clé privée de configurateur ;
dans lequel la détermination de la clé publique de réseau associée au dispositif réseau comprend de préférence :
la réception de la clé publique de réseau par le biais d'une connexion sécurisée avec le dispositif réseau, ou
la détermination de la clé publique de réseau par le biais d'une connexion hors bande avec le dispositif réseau qui est différente d'une connexion que le dispositif client établira avec le dispositif réseau, ou
la détection de la clé publique de réseau en utilisant au moins un membre du groupe comprenant une caméra, un microphone, un détecteur de lumière, un capteur et une interface de fréquence radio de courte portée du dispositif configurateur, dans lequel la détection de la clé publique de réseau en utilisant la caméra comprend de préférence l'utilisation de la caméra pour détecter une image associée au dispositif réseau, dans lequel au moins une portion de l'image comprend la clé publique de réseau ;
dans lequel l'établissement de la relation de confiance comprend de préférence la réception d'une annonce de service de support de configurateur à partir du dispositif réseau avant de déterminer la clé publique de réseau associée au dispositif réseau.

4. Procédé selon la revendication 3, comprenant en outre :
le cryptage de la clé publique de client avec la clé de relation de confiance avant d'envoyer la clé publique de client du dispositif configurateur au dispositif réseau.

5. Procédé selon la revendication 1, dans lequel la détermination de la clé publique de client associée au dispositif client comprend :
la détection de la clé publique de client en utilisant au moins un élément du groupe comprenant une caméra, un microphone, un détecteur de lumière, un capteur et une interface de fréquence radio de courte portée du dispositif configurateur ;
dans lequel la détection de la clé publique de client en utilisant la caméra comprend de préférence l'utilisation de la caméra pour détecter une image associée au dispositif client.

6. Procédé selon la revendication 1, dans lequel l'envoi de la clé publique de client associée au dispositif client comprend :
l'envoi d'un message de demande au dispositif réseau ;
la réception d'un élément de circonstance à partir du dispositif réseau ; et
l'envoi d'un message d'inscription au dispositif réseau, le message d'inscription comprenant la clé publique de client et une signature de configurateur obtenue, au moins en partie, à partir de l'élément de circonstance et d'une clé privée de configurateur, dans lequel la signature de configurateur fournit une deuxième authentification au dispositif réseau indiquant que le dispositif configurateur est autorisé à envoyer le message d'inscription ;
dans lequel la signature de configurateur est de préférence soit obtenue à partir de l'élément de circonstance et d'une clé privée de configurateur, soit basée, au moins en partie, sur une clé de relation de confiance associée à la relation de confiance ;
dans lequel le procédé comprend en outre de préférence :
la réception d'une clé d'inscription à partir du dispositif réseau ; et
l'envoi de la clé d'inscription au dispositif client, dans lequel la clé d'inscription est utilisée avec la clé publique de client pour la première authentification entre le dispositif réseau et le dispositif client.

7. Procédé selon la revendication 1, comprenant en outre :
l'envoi de données de configuration du dispositif configurateur au dispositif réseau après l'établissement de la relation de confiance.

8. Procédé selon la revendication 1, comprenant en outre :
l'envoi de données de configuration du dispositif configurateur au dispositif client pour aider le dispositif client dans l'association avec le dispositif réseau ;
dans lequel l'envoi des données de configuration comprend de préférence l'émission d'un premier message sur un canal par défaut accessible pour le dispositif client ;
dans lequel le premier message comprend de préférence des informations d'identité basées, au moins en partie, soit sur la clé publique de client, soit sur une clé publique de réseau associée au dispositif réseau.

9. Procédé selon la revendication 1, dans lequel le dispositif client est un premier dispositif client, le dispositif réseau est un deuxième dispositif client et le dispositif configurateur est un point d'accès ; ou
dans lequel le dispositif réseau est un point d'accès du réseau et dans lequel le dispositif configurateur est associé au point d'accès.

10. Procédé mis en oeuvre par un dispositif réseau (120) pour l'inscription d'un dispositif client (110) auprès d'un réseau, le procédé comprenant :
l'établissement, au niveau du dispositif réseau, d'une relation de confiance (225) avec un dispositif configurateur (130) ;
la réception, à partir du dispositif configurateur conformément à la relation de confiance, d'une clé publique de client associée au dispositif client avant une procédure d'inscription entre le dispositif client et le dispositif réseau ; et
l'utilisation de la clé publique de client pour la procédure d'inscription, dans lequel la procédure d'inscription comprend au moins une première authentification entre le dispositif réseau et le dispositif client sur la base, au moins en partie, de la clé publique de client.

11. Procédé mis en oeuvre par un dispositif client (110) pour l'inscription auprès d'un réseau, le procédé comprenant :
la fourniture, à un dispositif configurateur (130) ayant une relation de confiance (225) avec un dispositif réseau (120) du réseau, d'une clé publique de client associée au dispositif client avant une procédure d'inscription entre le dispositif client et le dispositif réseau ;
la réception, à partir du dispositif configurateur, d'un premier élément de circonstance et d'une clé publique réseau associée au dispositif réseau ;
la génération d'un deuxième élément de circonstance ;
la détermination d'une clé partagée basée, au moins en partie, sur le premier élément de circonstance, le deuxième élément de circonstance, la clé publique de réseau et une clé privée de client associée au dispositif client, dans lequel la clé privée de client correspond à la clé privée de client ; et
l'utilisation de la clé partagée pour la procédure d'inscription, dans lequel la procédure d'inscription comprend au moins une première authentification entre le dispositif réseau et le dispositif client sur la base, au moins en partie, de la clé partagée.

12. Dispositif configurateur adapté pour mettre en oeuvre un procédé selon l'une quelconque des revendications précédentes 1 à 9.

13. Dispositif réseau adapté pour mettre en oeuvre un procédé selon la revendication 10.

14. Dispositif client adapté pour mettre en oeuvre un procédé selon la revendication 11.

15. Produit de programme informatique comprenant des instructions pour l'implémentation d'un procédé selon l'une quelconque des revendications 1 à 9, 10 et/ou 11.
